# FASCICULE DE BREVET EUROPEEN

(11) **EP 3 023 725 B1**
(45) Date de publication et mention de la délivrance du brevet: **01.01.2020**
(21) Numéro de dépôt: 15195481.5
(22) Date de dépôt: 19.11.2015
(51) Int. Cl.: F28D 1/053, F28D 21/00, F24C 15/00, F24B 1/183, F24B 7/00, F24B 9/00, F24H 8/00, F24C 13/00

(54) **DISPOSITIF DE CUISSON, INSTALLATION LE COMPORTANT ET PROCÉDÉ D'INSTALLATION D'UN TEL DISPOSITIF**
KOCHGERÄT, ANLAGE, DIE DIESE UMFASST, UND EINBAUVERFAHREN EINER SOLCHEN VORRICHTUNG
COOKING DEVICE, INSTALLATION COMPRISING SAME AND METHOD FOR INSTALLING SUCH A DEVICE

(30) Priorité: 19.11.2014 FR 1461208
(43) Date de publication de la demande: 25.05.2016
(73) Titulaire: ENGIE, 92400 Courbevoie (FR)
(72) Inventeur: PUYAUMONT, Jean-Claude, 75013 PARIS (FR); RUILLARD, Romain, 91700 SAINT GENEVIEVE DES BOIS (FR); CARPENTIER, Stéphane, 92130 ISSY LES MOULINEAUX (FR)
(74) Mandataire: Cornuejols, Georges

(56) Documents cités:
- EP-A1- 0 498 749
- EP-A2- 1 647 793
- WO-A1-2011/140490
- DE-A1-102009 014 805
- DE-U1-202014 006 949
- FR-A1- 2 958 735
- US-A1- 2003 145 979
- US-A1- 2009 178 662
- US-A1- 2012 090 600
- US-A1- 2012 272 947

## Description

### DOMAINE TECHNIQUE DE L'INVENTION

La présente invention vise un dispositif de cuisson, une installation le comportant et un procédé d'installation d'un tel dispositif. Elle s'applique, notamment, à la récupération de chaleur de produits de combustions issus de dispositifs de cuisson professionnels.

### ETAT DE LA TECHNIQUE

Les appareils de cuisson professionnels fonctionnant au gaz rejettent, dans leur environnement immédiat, une importante quantité de produits de combustion et ce notamment à cause des puissances mises en œuvre. Ces produits de combustion présentent, lors de leur sortie de l'appareil, une température habituellement comprise entre 100°C et 150°C.

Dans la plupart des systèmes actuels, des hottes sont mises en oeuvre pour capter ces produits de combustion et pour les évacuer à l'extérieur du local abritant l'appareil de cuisson.

Ces systèmes ne permettent pas l'utilisation de l'énergie thermique disponible en sortie de ces appareils.

Certains systèmes actuels visent à convertir la chaleur des produits de combustion dans les hottes pour chauffer le local ou un ballon d'eau sanitaire, en mettant en œuvre une pompe à chaleur. Cependant, les températures des produits de combustion sont trop basses pour permettre une exploitation efficace de cette source d'énergie. D'autre part, chauffer le local comportant l'appareil de cuisson est rarement utile, ce local étant généralement chauffé par les divers appareils en fonctionnement, surtout lorsque ce local est une cuisine. L'utilisation d'une pompe à chaleur pour chauffer de l'eau chaude sanitaire augmente fortement la complexité et le prix du système.

D'autres systèmes actuels visent la récupération de chaleur dans les fours de cuisson industriels, tels les fours de boulangerie par exemple. Ces systèmes mettent en œuvre des échangeurs thermiques de récupération de chaleur des produits de combustion et des buées sortant des fours, ces échangeurs permettant ensuite l'échauffement d'un fluide stocké dans un ballon de stockage. Cependant, ces systèmes sont trop volumineux pour être adaptés à des systèmes électroménagers mis en œuvre dans des cuisines.

Un dispositif de cuisson de l'état de la technique est représenté par les documents DE-A-102009014805 et WO-A-2011140490.

Un dispositif d'échange de chaleur de l'état de la technique qui représente l'état de la technique pertinent est représenté par le document EP-A-0498749.

### OBJET DE L'INVENTION

La présente invention vise à remédier à tout ou partie de ces inconvénients.

A cet effet, selon un premier aspect, la présente invention vise un dispositif de cuisson avec les caractéristiques de la revendication 1.

Grâce à ces dispositions, le dispositif d'échange de chaleur est modulaire, ce qui permet d'adapter la dimension du dispositif à toutes les tailles de conduits de dispositifs de cuissons, notamment professionnels. De plus, le positionnement des échangeurs thermiques dans le conduit permet une récupération énergétique optimale, les produits de combustion étant plus chauds dans le conduit.

Dans des modes de réalisation, au moins un échangeur thermique comporte :
- une entrée arrière pour fluide caloporteur,
- une sortie avant pour fluide caloporteur reliée par une conduite à l'entrée arrière,
- une entrée avant pour fluide caloporteur échauffé et
- une sortie arrière pour fluide caloporteur échauffé reliée par une conduite à l'entrée avant.

Ces modes de réalisation permettent de former un dispositif d'échange de type échangeur à boucle.

Dans des modes de réalisation, au moins un échangeur thermique est :
- un échangeur à tubes en U,
- un échangeur à faisceau tubulaire horizontal,
- un échangeur à faisceau tubulaire vertical,
- un échangeur à spirales,
- un échangeur à plaques,
- un échangeur de chaleur rotatif ou
- un échangeur à ailettes.

Dans des modes de réalisation, le dispositif objet de la présente invention comporte une succession d'échangeurs thermiques, la sortie avant et l'entrée avant d'un échangeur thermique étant reliées, respectivement, à l'entrée arrière et à la sortie arrière de l'échangeur thermique lui succédant dans cette succession.

L'avantage de ces modes de réalisation est qu'ils permettent au fluide caloporteur de se déplacer d'un échangeur thermique à un autre, ce qui permet au dispositif de n'avoir qu'une entrée et qu'une sortie de fluide caloporteur à faire sortir du conduit.

Dans des modes de réalisation, le dispositif objet de la présente invention comporte une conduite de raccord reliant la sortie avant à l'entrée avant d'un échangeur thermique.

L'avantage de ces modes de réalisation est qu'ils permettent de réaliser un circuit unique du fluide caloporteur à travers les échangeurs thermiques du dispositif, le fluide caloporteur traversant ainsi deux fois chaque échangeur thermique.

Dans des modes de réalisation, le branchement entre une sortie et une entrée de deux échangeurs thermiques est réalisé par un raccord mécanique comportant un joint d'étanchéité.

Ces modes de réalisation ont l'avantage de rigidifier la liaison entre échangeurs thermiques et d'optimiser l'étanchéité des jonctions entre échangeurs thermiques malgré les variations thermiques qui leur sont appliquées.

Dans des modes de réalisation, l'entrée arrière est plus proche de l'ouverture du conduit que la sortie arrière.

L'avantage de ces modes de réalisation est qu'ils permettent une circulation du fluide caloporteur à contre-courant à travers les conduites traversant les échangeurs thermiques.

Dans des modes de réalisation :
- l'entrée arrière est positionnée de manière coaxiale à la sortie avant et
- la sortie arrière est positionnée de manière coaxiale à l'entrée avant.

Ces modes de réalisation permettent un assemblage facilité entre échangeurs thermiques, ce qui permet également d'optimiser le caractère modulaire du dispositif.

Selon un deuxième aspect, la présente invention vise une installation avec les caractéristiques de la revendication 7.

Ces modes de réalisation permettent l'utilisation de la chaleur échangée dans le dispositif d'échange de chaleur au sein d'un chauffe-eau, limitant ainsi les besoins énergétiques de ce chauffe-eau.

Dans des modes de réalisation, l'installation objet de la présente invention comporte une pompe de mise en circulation du fluide caloporteur entre le dispositif d'échange thermique et le chauffe-eau.

Ces modes de réalisation permettent de faciliter la circulation du fluide caloporteur entre le chauffe-eau et le dispositif d'échange de chaleur.

Selon un troisième aspect, la présente invention vise un procédé d'installation d'un dispositif de cuisson objet de la présente invention, qui comporte :
- une étape de retrait d'une mitre couvrant un conduit de fumées d'un dispositif de cuisson,
- une étape itérative d'assemblage de deux échangeurs thermiques par branchement d'une sortie avant d'un premier échangeur thermique à une entrée arrière du deuxième échangeur thermique et par branchement d'une entrée avant du premier échangeur thermique à une sortie arrière du deuxième échangeur thermique,
- une étape d'assemblage d'une conduite de raccord entre la sortie avant et l'entrée avant d'un échangeur thermique et
- une étape de suspension de l'assemblage à l'intérieur du conduit.

Les buts, avantages et caractéristiques particulières du dispositif de cuisson et du procédé objets de la présente invention étant similaires à ceux du dispositif d'échange de chaleur objet de la présente invention, ils ne sont pas rappelés ici.

Dans des modes de réalisation, le procédé objet de la présente invention comporte une étape de création d'un passage pour une conduite d'entrée de fluide caloporteur et/ou pour une conduite de sortie de fluide caloporteur dans le conduit de fumées du dispositif de cuisson.

### BREVE DESCRIPTION DES FIGURES

D'autres avantages, buts et caractéristiques particulières de l'invention ressortiront de la description non limitative qui suit d'au moins un mode de réalisation particulier des dispositifs, du procédé et de l'installation objets de la présente invention, en regard des dessins annexés, dans lesquels :
- la figure 1 représente, schématiquement et en perspective, un premier mode de réalisation particulier du dispositif objet de la présente invention,
- la figure 2 représente, schématiquement et en perspective, un deuxième mode de réalisation particulier du dispositif objet de la présente invention,
- la figure 3 représente, schématiquement et en perspective, un troisième mode de réalisation particulier du dispositif objet de la présente invention,
- la figure 4 représente, schématiquement et en perspective, un quatrième mode de réalisation particulier du dispositif objet de la présente invention,
- la figure 5 représente, schématiquement et en perspective, un cinquième mode de réalisation particulier d'un dispositif alimenté par le dispositif de cuisson objet de la présente invention,
- la figure 6 représente, schématiquement, un logigramme d'étapes d'un mode de réalisation particulier du procédé objet de la présente invention,
- la figure 7 représente, schématiquement et en coupe, une vue en coupe des quatrième et cinquièmes modes de réalisation du dispositif objet de la présente invention,
- les figures 8 à 12 représentent, schématiquement et en coupe, l'assemblage du dispositif objet de la présente invention à travers une succession d'étapes du procédé objet de la présente invention et
- la figure 13 représente, schématiquement et de face, un mode de réalisation particulier d'une suspension mise en œuvre par le dispositif objet de la présente invention.

### DESCRIPTION D'EXEMPLES DE REALISATION DE L'INVENTION

La présente description est donnée à titre non limitatif, chaque caractéristique d'un mode de réalisation pouvant être combinée à toute autre caractéristique de tout autre mode de réalisation de manière avantageuse.

On note dès à présent que les figures ne sont pas à l'échelle.

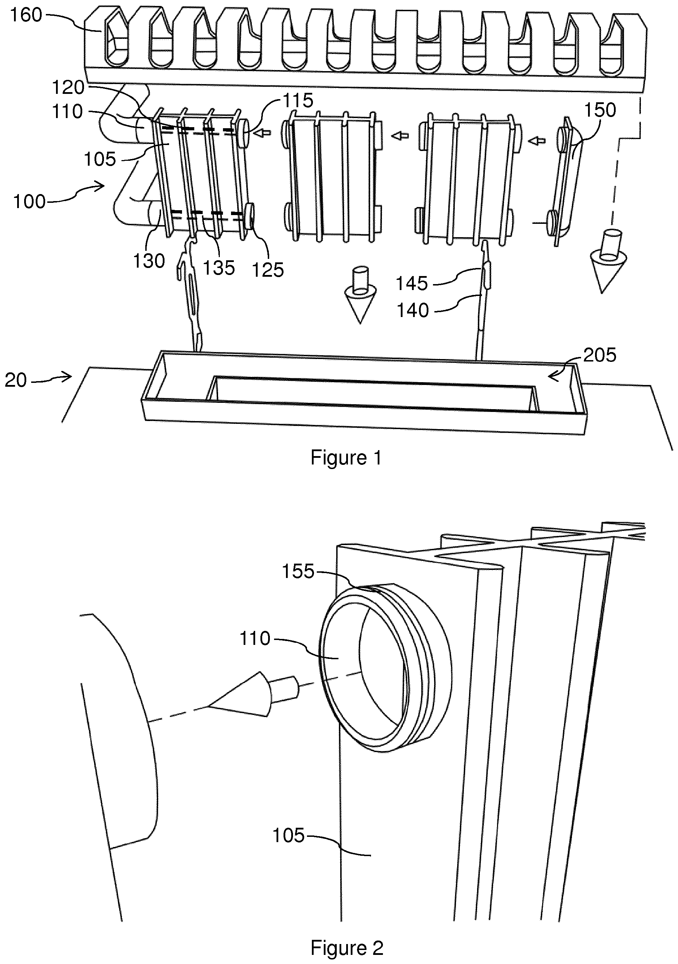

On note également que les figures 1 à 13 illustrent un mode de réalisation préférentiel de réalisation dans lequel le dispositif 100 d'échange de chaleur est de type échangeur à boucle, c'est-à-dire un échangeur traversé par deux flux de fluide caloporteur de sens opposés. Dans des variantes non représentées, le dispositif 100 d'échange est de type échangeur simple, c'est-à-dire un échangeur traversé par un flux de fluide caloporteur dans un seul sens.

De même, bien qu'un type particulier d'échangeur 105 soit illustré en figures 1 à 13, au moins un échangeur de chaleur 105 peut être :
- un échangeur à tubes en U,
- un échangeur à faisceau tubulaire horizontal,
- un échangeur à faisceau tubulaire vertical,
- un échangeur à spirales,
- un échangeur à plaques,
- un échangeur de chaleur rotatif ou
- un échangeur à ailettes.

Chaque échangeur thermique 105 du dispositif 100 peut être d'un type différent.

On observe, sur la figure 1, une vue en coupe d'un premier mode de réalisation d'un dispositif 100 objet de la présente invention. Ce dispositif 100 d'échange de chaleur pour former un dispositif 20 de cuisson objet de la présente invention 100 comporte :
- une succession d'échangeurs thermiques 105, chaque échangeur thermique 105 comportant :
   - une entrée 110 arrière pour fluide caloporteur,
   - une sortie 115 avant pour fluide caloporteur reliée par une conduite 120 à l'entrée arrière,
   - une entrée 125 avant pour fluide caloporteur échauffé et
   - une sortie 130 arrière pour fluide caloporteur échauffé reliée par une conduite 135 à l'entrée avant ;
- une conduite 150 de raccord reliant la sortie 115 avant à l'entrée 125 avant d'un échangeur 105 thermique et
- un moyen 140 de suspension de chaque échangeur 105 thermique à l'intérieur d'un conduit pour fumées du dispositif 20 de cuisson.

On appelle « fluide caloporteur » un fluide tel de l'air, de l'huile ou de l'eau, par exemple.

Chaque échangeur thermique 105 de la succession d'échangeurs thermiques 105 est, par exemple, un boîtier en acier inoxydable à ailettes comportant les quatre ouvertures des entrées 110 et 125 et des sorties, 115 et 130, et comportant des conduites, 120 et 135, internes reliant chacun une entrée à une sortie. La première ouverture 110 correspond à l'entrée arrière 110, c'est à dire à un premier point d'entrée du fluide caloporteur dans l'échangeur thermique 105. Le boîtier présente, par exemple, des dimensions inférieures à dix centimètres de longueur, dix centimètres de hauteur et trois centimètres de largeur.

Le fluide caloporteur est transporté jusque dans l'entrée arrière 110 par le biais d'une pompe, par exemple. Cette pompe entraîne, de plus, le déplacement du fluide depuis l'entrée arrière 110 jusqu'à la sortie avant 115, par le biais de la conduite 120 à l'intérieur de l'échangeur thermique 105. Cette conduite 120 présente une forme généralement droite ou un ensemble de circonvolutions, par exemple.

La deuxième ouverture 115 correspond à la sortie avant 115 de l'échangeur thermique 105, cette sortie avant 115 est le premier point d'évacuation du fluide caloporteur transitant par l'échangeur thermique 105.

La troisième ouverture 125 correspond à l'entrée avant 125 de l'échangeur thermique 105, cette entrée avant 125 est le deuxième point d'entrée du fluide caloporteur dans l'échangeur thermique 105.

Le fluide caloporteur est transporté depuis l'entrée avant 125 vers la sortie arrière 130 par la conduite 135, similaire à la conduite 120. La quatrième ouverture 130 correspond à la sortie arrière 130 de l'échangeur thermique 105 et constitue le deuxième point de sortie du fluide caloporteur de l'échangeur thermique 105.

Préférentiellement, l'entrée arrière 110 est positionnée, de manière coaxiale à la sortie avant 115 et la sortie arrière 130 est positionnée de manière coaxiale à l'entrée avant 125.

Préférentiellement, les ouvertures, 110, 115, 125 et 130, sont identiques. Préférentiellement, les conduites, 120 et 135, sont identiques. Préférentiellement, l'échangeur thermique 105 présente deux plans de symétrie orthogonaux passant par le centre de l'échangeur thermique 105. Ainsi, l'échangeur thermique 105 peut être positionné de sorte à ce que la sortie avant 115 devienne l'entrée arrière 110, l'entrée avant 125 ou la sortie arrière 130 en fonction du positionnement de l'échangeur thermique 105.

La succession d'échangeurs thermiques 105 est réalisée par le branchement de la sortie avant 115 et de l'entrée avant 125 d'un échangeur thermique 105 respectivement sur l'entrée arrière 110 et sur la sortie arrière 130 d'un autre échangeur thermique 105. De manière itérative, la succession d'échangeurs thermiques 105 est ainsi constituée.

Une fois que la succession d'échangeurs thermiques 105 présente une longueur adaptée aux dimensions du conduit 205, la conduite de raccord 150 est placée pour relier la sortie 115 avant à l'entrée 125 avant du dernier échangeur thermique 105 de la succession d'échangeurs thermiques.

L'entrée arrière 110 et la sortie arrière 130 du premier échangeur thermique 105 de la succession sont branchées respectivement à une entrée (non représentée) de fluide caloporteur et à une sortie (non représentée) de fluide caloporteur échauffé.

Ainsi, le flux de fluide caloporteur traverse successivement l'entrée arrière 110, la conduite 120 et la sortie avant 115 de chaque échangeur thermique 105 avant de traverser la conduite de raccord 150 puis successivement l'entrée avant 125, la conduite 135 et la sortie arrière 130 de chaque échangeur thermique 105.
Le positionnement du dispositif 100 dans le conduit 205 est réalisé de telle manière que l'entrée arrière 110 du premier échangeur thermique 105 de la succession soit plus proche de l'ouverture du conduit 205 que la sortie arrière 130 dudit échangeur thermique 105 afin de réaliser un transfert de chaleur à contre-courant.

Une fois le dispositif 100 positionné dans le conduit 205, ce conduit 205 est recouvert par une mitre 160. Le conduit 205 présente une évacuation verticale, par exemple. Ce dispositif 100 est fixé au conduit 205 par le moyen de suspension 140. Ce moyen de suspension 140 est, par exemple, une pièce métallique fixée de part et d'autre d'une ouverture supérieure du conduit 205 et dont une partie s'étend à l'intérieur du conduit 205. C'est cette partie à l'intérieur du conduit 205 qui suspend le dispositif 100 en entourant au moins un échangeur thermique 105. Cette pièce métallique, aussi appelée « berceau », agit comme moyen de suspension 145 d'au moins un échangeur thermique 105 à l'intérieur du conduit 205.Dans des variantes, un ensemble d'échangeurs thermiques sont positionnés au contact de la mitre et/ou de surfaces du dispositif de cuisson proches des parties chauffantes.

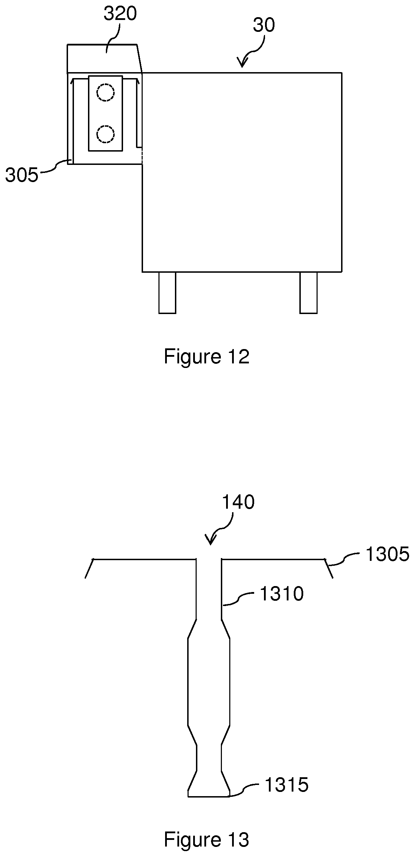

Un mode de réalisation particulier du moyen de suspension 140 est illustré en figure 13.

Sur cette figure 13, on observe, vu de face, un moyen de suspension 140, qui comporte :
- deux crochets 1305, chaque crochet étant relié à une tige 1310, chaque tige 1310 s'étendant dans une direction commune et, préférentiellement, de manière parallèle et
- les deux tiges 1310 étant reliées par une tige de liaison 1315 servant d'appui de suspension pour un échangeur thermique.

Les crochets 1305 sont positionnés de part et d'autre d'une ouverture supérieure du conduit pour fumées. Les tiges 1310 sont alors insérées dans le conduit pour fumées. Le dispositif d'échange de chaleur est alors inséré dans l'interstice entre les tiges 1310 jusqu'à être en butée sur la tige de liaison 1315. Dans cette position en butée, le dispositif d'échange de chaleur est positionné à l'intérieur du conduit pour fumées.

Dans des variantes, le dispositif 100 comporte une pluralité de moyens de suspension 140.

Dans des variantes, le dispositif 100 comporte un seul échangeur 105 de chaleur. On observe, sur la figure 2, schématiquement et en perspective, un mode de réalisation particulier de l'échangeur thermique 105 du dispositif 100 objet de la présente invention. On observe, notamment, que l'entrée arrière 110 est entourée par un joint d'étanchéité 155 permettant la fixation à une ouverture d'alimentation en fluide caloporteur, par exemple. Dans des variantes, chaque entrée, 110 et 125, et chaque sortie, 115 et 130, est entourée par un joint d'étanchéité. De cette manière, le branchement entre une sortie, 115 ou 130, et une entrée, 110 ou 125, de deux échangeurs 105 thermiques est réalisé par la mise en œuvre de ce joint d'étanchéité 155 assurant l'étanchéité du dispositif 100. Le branchement entre une sortie, 115 et 130, et une entrée, 110 et 125, de deux échangeurs thermiques est réalisé par un raccord mécanique comportant un joint d'étanchéité 155.

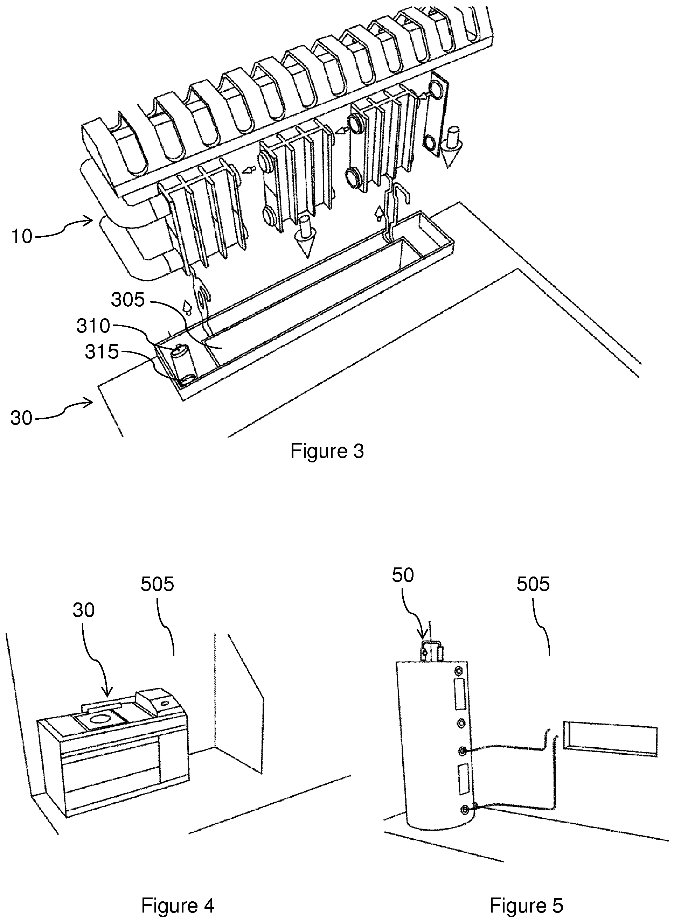

On observe, sur la figure 3, schématiquement et en perspective, un mode de réalisation particulier du dispositif 30 de cuisson objet de la présente invention. Ce dispositif 30 de cuisson, comporte :
- un conduit 305 de fumées et
- un dispositif 100 d'échange de chaleur comportant :
   - au moins un échangeur 105 thermique, chaque échangeur thermique comportant :
      - une entrée 110 arrière pour fluide caloporteur,
      - une sortie 115 avant pour fluide caloporteur reliée par une conduite 120 à l'entrée arrière,
      - une entrée 125 avant pour fluide caloporteur échauffé et
      - une sortie 130 arrière pour fluide caloporteur échauffé reliée par une conduite 135 à l'entrée avant et
   - un moyen 140 de suspension de chaque échangeur thermique à l'intérieur du conduit.

Le conduit 305 est, par exemple, une conduite d'évacuation de fumées produites par un brûleur à gaz. Ce conduit 305 présente, préférentiellement, une ouverture supérieure plane dont le plan général est parallèle au sol lorsque le dispositif 30 de cuisson est en position d'utilisation.

Cette ouverture supérieure peut être de section rectangulaire ou circulaire.

On observe, sur la figure 4, le dispositif de cuisson 30 tel que décrit en regard de la figure 3, ce dispositif 30 étant positionné dans un premier local, les entrée et sortie pour fluide caloporteur traversant une paroi 505 contre laquelle le dispositif 30 est positionné.

On observe, sur la figure 5, une vue en perspective d'un deuxième local comportant un ballon d'eau chaude sanitaire 50 échauffé par le fluide en caloporteur traversant la paroi 505. Ce fluide caloporteur, par échange de chaleur, échauffe l'eau du ballon d'eau chaude sanitaire 50. Le fluide caloporteur refroidi est ensuite renvoyé vers le dispositif 30 de la figure 4. Dans des variantes, le ballon d'eau chaude sanitaire 50 est remplacé par un appareil électroménager, tel une machine à laver ou un lave-vaisselle par exemple.

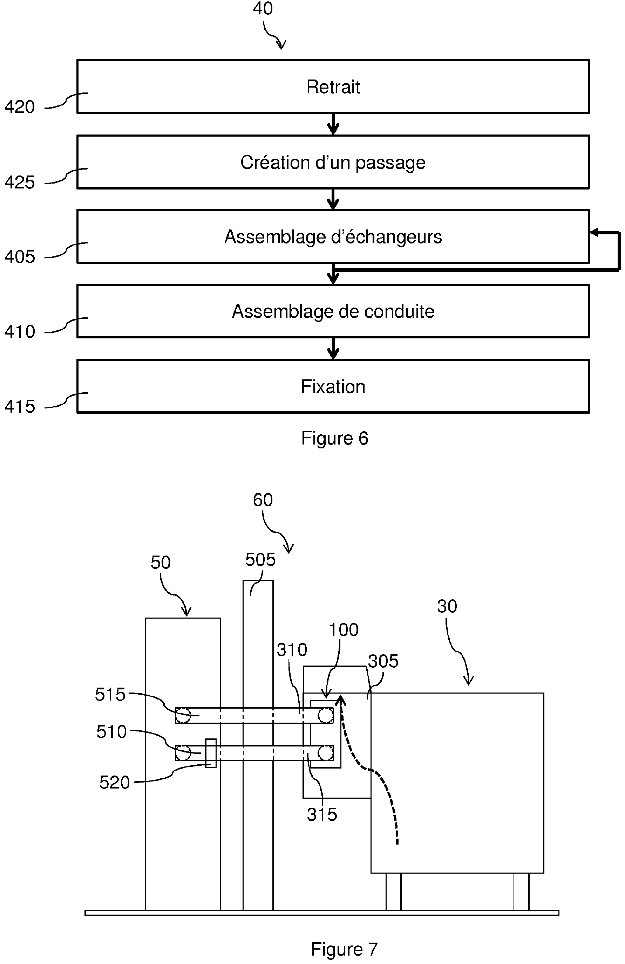

On observe, sur la figure 6, un logigramme d'étapes d'un mode de réalisation particulier du procédé 40 objet de la présente invention. Ce procédé 40 d'installation d'un dispositif 100 d'échange de chaleur, tel que décrit en regard des figures 1 à 3 et 7 à 13, comporte :
- une étape 420 de retrait d'une mitre couvrant un conduit de fumées d'un dispositif de cuisson,
- une étape 405 itérative d'assemblage de deux échangeurs thermiques par branchement d'une sortie avant d'un premier échangeur thermique à une entrée arrière du deuxième échangeur thermique et par branchement d'une entrée avant du premier échangeur thermique à une sortie arrière du deuxième échangeur thermique,
- une étape 410 d'assemblage d'une conduite de raccord entre la sortie avant et l'entrée avant d'un échangeur thermique et
- une étape 415 de suspension de l'assemblage à l'intérieur du conduit.

L'étape de retrait 420 est réalisée, par exemple, par désassemblage de la mitre du dispositif de cuisson, le type de désassemblage dépendant de la fixation entre la mitre et le dispositif de cuisson. Le désassemblage peut être réalisé par dévissage, décollage, désenclipsage ou déclouage par exemple.

L'étape itérative d'assemblage 405 est mise en œuvre par le branchement successif de la sortie avant et de l'entrée avant d'un échangeur thermique à la sortie arrière et à l'entrée arrière d'un autre échangeur thermique. De cette manière, la longueur du dispositif 100 est modulée en fonction du nombre d'échangeurs thermiques ainsi assemblés, pour correspondre aux dimensions du conduit.

Une fois la longueur souhaitée atteinte, une conduite de raccord est assemblée 410 au dernier échangeur thermique de la succession d'échangeurs assemblée au cours de l'étape d'assemblage 405. Cette conduite de raccord branche la sortie avant à l'entrée avant de cet échangeur thermique.

Lorsque cet assemblage 410 est réalisé, le dispositif 100 est fixé dans le conduit d'un dispositif de cuisson comportant un conduit pour évacuation de produits de combustion. Cette étape de fixation 415 est réalisée, par exemple, par un ensemble de pièces métalliques fixées de part et d'autre d'une ouverture du conduit et comportant une pièce s'étendant à l'intérieur de ledit conduit de sorte que le dispositif 100 soit soutenu à l'intérieur du conduit.

Dans des modes de réalisation particuliers, le procédé 40 objet de la présente invention comporte une étape 425 de création d'un passage pour une conduite d'entrée de fluide caloporteur et/ou pour une conduite de sortie de fluide caloporteur dans le conduit de fumées du dispositif de cuisson.

Cette étape de création d'un passage 425 est réalisée, par exemple, par perçage d'une paroi externe du conduit de manière à créer un passage dont le dimensionnement permet le passage d'une conduite d'entrée et/ou une conduite de sortie de fluide caloporteur reliée respectivement à l'entrée et/ou à la sortie pour fluide caloporteur de l'échangeur de chaleur.

On observe, sur la figure 7, schématiquement et en coupe, un mode de réalisation particulier de l'installation 60 objet de la présente invention. Cette installation 60 comporte :
- un dispositif 100 d'échange de chaleur objet de la présente invention et
- un chauffe-eau 50 fournissant au, et recevant du, dispositif 100 d'échange de chaleur un fluide caloporteur.

Dans des modes de réalisation particuliers, l'installation objet de la présente invention comporte une pompe 520 de mise en circulation du fluide caloporteur sorti chaque échangeur thermique vers le chauffe-eau.

Cette pompe 520 est positionnée au niveau du chauffe-eau, du dispositif 100 d'échangeur de chaleur ou entre ces deux éléments.

Cette installation 60 peut ainsi être répartie entre deux locaux séparés par une cloison 505. Dans un premier local, un dispositif 30 de cuisson tel que décrit en regard des figures 3 et 4 est positionné contre la paroi 505. Ce dispositif de cuisson 30 comporte un conduit 305 d'évacuation de fumées, ces fumées étant évacuées vers le haut du conduit 305 couverte par une mitre.

Dans des variantes, le dispositif 30 de cuisson et le ballon d'eau chaude sanitaire 50 sont positionnés dans le même local.

Les produits de combustion entrent, au cours de la sortie du conduit 305, en contact avec un dispositif 100 d'échange de chaleur tel que décrit en regard des figures 1 et 2 positionné dans ledit conduit 305. Dans ce dispositif, un fluide caloporteur est alimenté par une ouverture 310 du conduit 305 positionnée en aval du chemin des produits de combustion par rapport à une deuxième ouverture 315 plus basse. Ce fluide caloporteur est échauffé en traversant une succession d'échangeurs thermiques avant de quitter le dispositif d'échange de chaleur par la sortie 315. De cette manière, le circuit du fluide caloporteur permet un échange de chaleur à contre-courant. Le fluide caloporteur ainsi échauffé traverse la paroi 505 par une conduite 510 et est alimenté à un dispositif 50 tel que décrit en regard de la figure 5, par exemple. Dans ce dispositif 50, un échange de chaleur est réalisé sur le fluide caloporteur de manière à utiliser la chaleur pour échauffer, par exemple, un ballon d'eau sanitaire. Le fluide caloporteur est ensuite alimenté, par une autre conduite 515 traversant la paroi 505 en entrée du dispositif d'échange de chaleur.

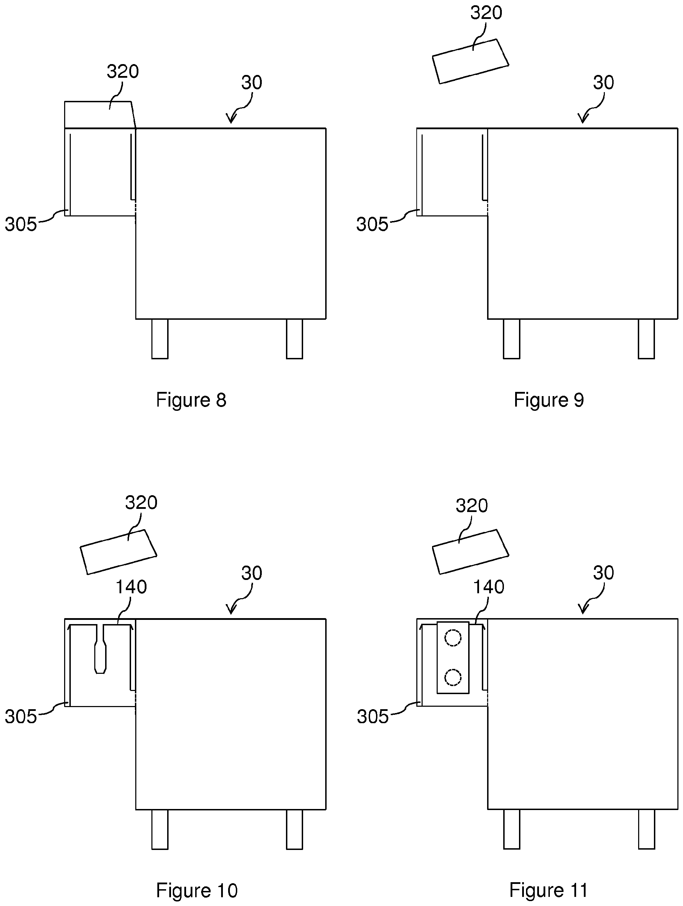

Les figures 8 à 12 représentent :
- en figure 8, un dispositif de cuisson 30 comportant un conduit 305 de sortie de fumée, cette conduit 305 étant surmontée d'une mitre 320,
- en figure 9, le dispositif de cuisson 30 dont la mitre 320 a été retirée par un opérateur,
- en figure 10, un moyen de suspension 140 d'un dispositif 100 d'échange de chaleur, ce moyen de suspension 140 étant positionné, par un opérateur, en appui contre des bords d'une ouverture supérieure du conduit 305,
- en figure 11, au moins un échangeur de chaleur du dispositif 100 d'échange de chaleur positionné dans le conduit 305, chaque échangeur de chaleur d'une succession d'échangeurs ayant été préalablement assemblé à chaque autre échangeur de chaleur de ladite succession et
- en figure 12, le dispositif de cuisson 30 dont la mitre 320 a été fixée au-dessus du conduit 305

## Revendications

1. Dispositif (20, 30) de cuisson comportant :
- un conduit de fumées (205, 305) et
- un dispositif (100) d'échange de chaleur, **caractérisé en ce qu'**il comporte :
- une succession d'échangeurs (105) thermiques, chaque échangeur thermique comportant :
- une entrée (110) arrière pour fluide caloporteur,
- une sortie (115) avant pour fluide caloporteur reliée par une conduite (120) à l'entrée arrière,
- une entrée (125) avant pour fluide caloporteur échauffé et
- une sortie (130) arrière pour fluide caloporteur échauffé reliée par une conduite (135) à l'entrée avant ;
- la sortie avant (115) et l'entrée (125) avant d'un échangeur thermique étant reliées, respectivement, à l'entrée (110) arrière et à la sortie (130) arrière de l'échangeur thermique lui succédant dans cette succession et
- un moyen (140) de suspension de chaque échangeur thermique à l'intérieur d'un conduit de fumées du dispositif de cuisson.

2. Dispositif de cuisson selon la revendication 1, dans lequel au moins un échangeur (105) thermique est :
- un échangeur à tubes en U,
- un échangeur à faisceau tubulaire horizontal,
- un échangeur à faisceau tubulaire vertical,
- un échangeur à spirales,
- un échangeur à plaques,
- un échangeur de chaleur rotatif ou
- un échangeur à ailettes.

3. Dispositif de cuisson selon l'une des revendications 1 ou 2, qui comporte une conduite (150) de raccord reliant la sortie (115) avant à l'entrée (125) avant d'un échangeur (105) thermique.

4. Dispositif de cuisson selon l'une des revendications 1 à 3, dans lequel le branchement entre une sortie (115, 130) et une entrée (110, 125) de deux échangeurs (105) thermiques est réalisé par un raccord mécanique comportant un joint (155) d'étanchéité.

5. Dispositif de cuisson selon l'une des revendications 1 à 4, dans lequel l'entrée (110) arrière est plus proche de l'ouverture du conduit (205, 305) que la sortie (130) arrière.

6. Dispositif de cuisson selon l'une des revendications 1 à 5, dans lequel :
- l'entrée (110) arrière est positionnée de manière coaxiale à la sortie (115) avant et
- la sortie (130) arrière est positionnée de manière coaxiale à l'entrée (125) avant.

7. Installation (60), **caractérisée en ce qu'**elle comporte :
- un dispositif de cuisson selon l'une des revendications 1 à 6 et
- un chauffe-eau (50) fournissant au, et recevant du, dispositif d'échange de chaleur un fluide caloporteur.

8. Installation (60) selon la revendication 7, qui comporte une pompe (520) de mise en circulation du fluide caloporteur entre le dispositif d'échange thermique et le chauffe-eau.

9. Procédé (40) d'installation d'un dispositif de cuisson selon l'une des revendications 3 à 6, **caractérisé en ce qu'**il comporte :
- une étape (420) de retrait d'une mitre couvrant un conduit de fumées d'un dispositif de cuisson,
- une étape (405) itérative d'assemblage de deux échangeurs thermiques par branchement d'une sortie avant d'un premier échangeur thermique à une entrée arrière du deuxième échangeur thermique et par branchement d'une entrée avant du premier échangeur thermique à une sortie arrière du deuxième échangeur thermique,
- une étape (410) d'assemblage d'une conduite de raccord entre la sortie avant et l'entrée avant d'un échangeur thermique et
- une étape (415) de suspension de l'assemblage à l'intérieur du conduit.

10. Procédé (40) selon la revendication 9, qui comporte une étape de création d'un passage pour une conduite d'entrée de fluide caloporteur et/ou pour une conduite de sortie de fluide caloporteur dans le conduit de fumées du dispositif de cuisson.

## Patentansprüche

1. Vorrichtung (20, 30) zum Kochen, umfassend:
- einen Rauchabzugskanal (205, 305) und
- eine Vorrichtung (100) für den Wärmetausch, **dadurch gekennzeichnet, dass** sie umfasst:
- eine Folge von Wärmetauschern (105), wobei jeder Wärmetauscher umfasst:
- einen hinteren Eingang (110) für das Heizmedium,
- einen vorderen Ausgang (115) für das Heizmedium, der durch einen Kanal (120) mit dem hinteren Eingang verbunden ist,
- einen vorderen Eingang (125) für das erhitzte Heizmedium und
- einen hinteren Ausgang (130) für das erhitzte Heizmedium, der durch einen Kanal (135) mit dem vorderen Eingang verbunden ist,
- wobei der vordere Ausgang (115) und der vordere Eingang (125) eines Wärmetauschers jeweils am hinteren Eingang (110) und am hinteren Ausgang (130) des Wärmetauschers verbunden sind und ihm dabei in dieser Folge folgen und
- ein Aufhängungsmittel (140) jedes Wärmetauschers im Innern eines Rauchabzugskanals der Kochvorrichtung.

2. Kochvorrichtung gemäß Anspruch 1, bei der wenigstens ein Wärmetauscher (105):
- ein Wärmetauscher mit U-förmigem Rohr ist,
- ein Wärmetauscher mit horizontalem Rohrbündel ist,
- ein Wärmetauscher mit vertikalem Rohrbündel ist,
- ein Wärmetauscher mit Spiralen ist,
- ein Wärmetauscher mit Platten ist,
- ein rotierender Wärmetauscher ist oder
- ein Wärmetauscher mit Flügeln ist.

3. Kochvorrichtung gemäß einem der Ansprüche 1 oder 2, die einen Anschlusskanal (150) umfasst, der den vorderen Ausgang (115) mit dem vorderen Eingang (125) eines Wärmetauschers (105) verbindet.

4. Kochvorrichtung gemäß einem der Ansprüche 1 bis 3, bei dem der Anschluss zwischen einem Ausgang (115, 130) und einem Eingang (110, 125) von zwei Wärmetauschern (150) durch einen mechanischen Anschluss hergestellt ist, der eine hermetische Dichtung (155) umfasst.

5. Kochvorrichtung gemäß einem der Ansprüche 1 bis 4, bei der der hintere Eingang (110) näher an der Öffnung des Kanals (205, 305) ist als der hintere Ausgang (130).

6. Kochvorrichtung gemäß einem der Ansprüche 1 bis 5, bei der:
- der hintere Eingang (110) koaxial am vorderen Ausgang (115) positioniert ist und
- der hintere Ausgang (130) koaxial am vorderen Eingang (125) positioniert ist.

7. Anlage (60), **dadurch gekennzeichnet, dass** sie umfasst:
- eine Kochvorrichtung gemäß einem der Ansprüche 1 bis 6 und
- einen Warmwasserbereiter (50), der der Wärmetauschervorrichtung ein Heizmedium liefert und von ihr empfängt.

8. Anlage (60) gemäß Anspruch 7, die eine Pumpe (520) umfasst, um das Heizmedium zwischen der Wärmetauschervorrichtung und dem Warmwasserbereiter zum Umlaufen zu bringen.

9. Einbauverfahren (40) einer Kochvorrichtung gemäß einem der Ansprüche 3 bis 6, **dadurch gekennzeichnet, dass** es umfasst:
- einen Abnahmeschritt (420) einer Windkappe, die einen Rauchabzugskanal einer Kochvorrichtung abdeckt,
- einen iterativen Montageschritt (405) von zwei Wärmetauschern durch Anschließen eines vorderen Ausgangs eines ersten Wärmetauschers an einen hinteren Eingang des zweiten Wärmetauscher und durch Anschließen eines vorderen Eingangs des ersten Wärmetauschers an einen hinteren Ausgang des zweiten Wärmetauschers,
- einen Montageschritt (410) eines Anschlusskanals zwischen dem vorderen Ausgang und dem vorderen Eingang eines Wärmetauschers und
- einen Aufhängungsschritt (415) der Struktur im Innern des Kanals.

10. Verfahren (40) gemäß Anspruch 9, das einen Schritt zum Schaffen eines Durchgangs für einen Eingangskanal des Heizmediums und / oder für einen Ausgangsschritt des Heizmediums in dem Rauchabzugskanal der Kochvorrichtung umfasst.

## Claims

1. Cooking device (20, 30) comprising:
- a flue vent (205, 305) and
- a device (100) for transferring heat, **characterized in that** it comprises:
- a series of heat exchangers (105), each heat exchanger comprising:
- a rear inlet (110) for heat-transfer fluid;
- a front outlet (115) for heat-transfer fluid, connected by a conduit (120) to the rear inlet;
- a front inlet (125) for heated heat-transfer fluid; and
- a rear outlet (130) for heated heat-transfer fluid, connected by a conduit (135) to the front inlet;
- the front outlet (115) and the front inlet (125) of one heat exchanger being connected, respectively, to the rear inlet (110) and the rear outlet (130) of the heat exchanger that comes after it in this series; and
- a means (140) for suspending each heat exchanger within a flue vent of the cooking device.

2. Cooking device according to claim 1, wherein at least one heat exchanger (105) is:
- a U-shaped tube heat exchanger;
- a horizontal tube bundle heat exchanger;
- a vertical tube bundle heat exchanger;
- a spiral heat exchanger;
- a plate heat exchanger;
- a rotary heat exchanger; or
- a finned heat exchanger.

3. Cooking device according to one of claims 1 or 2, which comprises a connector conduit (150) connecting the front outlet (115) to the front inlet (125) of a heat exchanger (105).

4. Cooking device according to any one of claims 1 to 3, wherein the connection between an inlet (115, 130) and an outlet (110, 125) of two heat exchangers (105) is realized by a mechanical connection comprising a hermetic seal (155).

5. Cooking device according to any one of claims 1 to 4, wherein the rear inlet (110) is closer to the opening of the conduit (205, 305) than the rear outlet (130).

6. Cooking device according to one of claims 1 to 5, wherein:
- the rear inlet (110) is positioned coaxially to the front outlet (115) and
- the rear outlet (130) is positioned coaxially to the front inlet (125).

7. Installation (60), **characterized in that** it comprises:
- a cooking device according to any one of claims 1 to 6 and
- a water heater (50) supplying and receiving a heat-transfer fluid respectively to and from the heat transfer device.

8. Installation (60) according to claim 7, which comprises a pump (520) for circulating the heat-transfer fluid between the heat transfer device and the water heater.

9. Method (40) of installing a cooking device according to one of claims 3 to 6, **characterized in that** it comprises:
- a step (420) of removing a cap covering a flue vent of a cooking device;
- an iterative step (405) of assembling two heat exchangers by connecting a front outlet of a first heat exchanger to a rear inlet of a second heat exchanger, and by connecting a front inlet of the first heat exchanger to a rear outlet of the second heat exchanger;
- a step (410) of assembling a connector conduit between the front outlet and the front inlet of a heat exchanger; and
- a step (415) of suspending the assembly inside the conduit.

10. Method (40) according to claim 9, which comprises a step of creating a passage for a heat-transfer fluid inlet conduit and/or for a heat-transfer fluid outlet conduit inside the flue vent of the cooking device.
